(19) Europäisches Patentamt
European Patent Office
Office européen des brevets

(11) **EP 0 720 695 B2**

(12) **NEUE EUROPÄISCHE PATENTSCHRIFT**

(45) Veröffentlichungstag und Bekanntmachung des Hinweises auf die Entscheidung über den Einspruch:
**03.01.2007 Patentblatt 2007/01**

(45) Hinweis auf die Patenterteilung:
**02.12.1998 Patentblatt 1998/49**

(21) Anmeldenummer: **94927636.4**

(22) Anmeldetag: **21.09.1994**

(51) Int Cl.:
*F16B 19/04* (2006.01)    *B21J 15/02* (2006.01)

(86) Internationale Anmeldenummer:
**PCT/EP1994/003159**

(87) Internationale Veröffentlichungsnummer:
**WO 1995/009307 (06.04.1995 Gazette 1995/15)**

(54) **SELBSTSTANZENDE BEFESTIGUNGSVORRICHTUNG**

SELF-PENETRATING FASTENING DEVICE

SYSTEME DE FIXATION AUTOPERFORANT

(84) Benannte Vertragsstaaten:
**DE ES FR GB IT SE**

(30) Priorität: **29.09.1993 DE 4333052**

(43) Veröffentlichungstag der Anmeldung:
**10.07.1996 Patentblatt 1996/28**

(73) Patentinhaber: **AUDI AG**
**85045 Ingolstadt (DE)**

(72) Erfinder:
• **SINGH, Sumanjit**
**D-85080 Gaimersheim (DE)**
• **BLACKET, Stuart, Edmond**
**Closeburn,**
**Brisbane, QLD 4520 (AU)**
• **JONES, Trevor, B.**
**Entwistle,**
**Bolton BL7 0LU (GB)**
• **LITHERLAND, Howard, J.**
**Wrexham,**
**Clwyd (GB)**

(74) Vertreter: **Geissler, Manfred**
**Audi AG,**
**Abteilung I/EK-P**
**85045 Ingolstadt (DE)**

(56) Entgegenhaltungen:
EP-A- 0 129 358          WO-A-94/14554
DE-C- 3 942 482          GB-A- 1 538 027
GB-A- 2 184 510          ZA-A- 918 340
ZA-A- 9 108 340

• "Aluminium Industry, The Applications Magazine" Oct./Nov. 1992 (Volume 11,N°5), Seiten 1, 24-26

**Beschreibung**

Die Erfindung bezieht sich auf eine selbststanzende Befestigungsvorrichtung, entsprechend dem Oberbegriff des Anspruchs 1.

Eine solche selbststanzende Befestigungsvorrichtung ist in der ZA-A-918 340 beschrieben.

Sollen solche selbststanzenden Nietverbindungen auch im Bereich der Kraftfahrzeugtechnik verwendet werden, beispielsweise um Karosseriebleche miteinander zu verbinden, so spielen neben der Korrosionsstabilität noch weitere wesentliche Faktoren hinein. Wegen dort auftretender hoher mechanischer Beanspruchungen ist die Qualität, d.h. die Festigkeit der Verbindung zweier Bleche von ausschlaggebender Bedeutung. Darüberhinaus sollte je nach Einsatzort (nicht verdeckte Karosseriebereiche) die Oberseite des Nietkopfes nach Herstellung der Nietverbindung mit der umgebenden Blechoberfläche soweit als möglich bündig abschließen können. Auch darf die Herstellung der Nietverbindung besagte Oberflächenbereiche des Bleches so wenig als möglich beeinträchtigen (z.B. verformen aufgrund von Blechverzug), um evtl. notwendig werdende Nacharbeiten zur Verbesserung des optischen Eindruckes auf ein Minimum zu reduzieren.

Diesen weiteren Erfordernissen genügt die vorbekannte Nietverbindung nicht im gewünschten Umfang.

Es ist daher die Aufgabe der Erfindung, die bekannte selbststanzende Befestigungsvorrichtung in der Weise weiterzubilden, daß die damit hergestellte Nietverbindung bezüglich ihrer Festigkeit hohen Anforderungen genügen kann und daß die Werkstückoberfläche im Bereich der Nietverbindung nicht nachhaltig beeinträchtigt wird.

Dies gelingt gemäß der Erfindung dadurch, daß die selbststanzende Befestigungsvorrichtung die weiteren Merkmale nach dem Kennzeichen des Patentanspruches 1 aufweist.

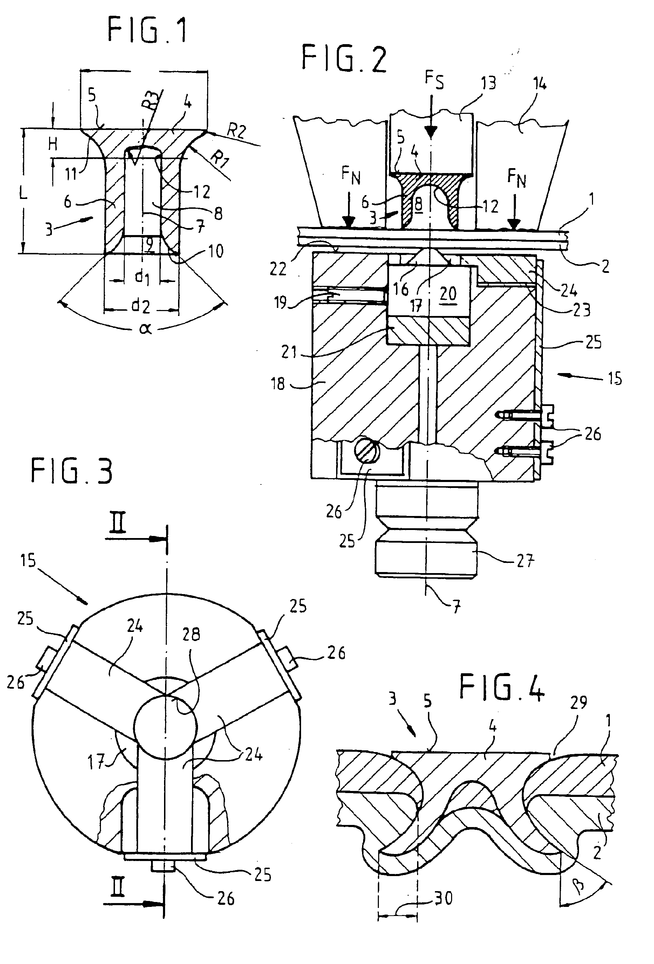

Aufgrund der im weitesten Sinne konusförmigen Ausbildung der Nietschaftausnehmung im Bereich der freien Stirnfläche wird beim Eindringen des Nietes in das Werkstück mit zunehmender Eindringtiefe wegen einer dabei entstehenden größeren Spreizkraft bewirkt, daß die radiale Auswärtsbewegung (Aufweitung) des Nietschaftes eine solche Größenordnung erreicht, daß ein Spreizwinkel > 45° entstehen kann, was wiederum einen die Festigkeit, insbesondere die Kopfzugfestigkeit, der Nietverbindung entsprechend erhöhenden Hinterschnitt (Endbereich des Nietschaftes radial weiter ausladend als die an der Nietschaft-Mantelfläche anliegende Auswölbung des unteren Bleches; vgl. Bezugszeichen 30 in Fig. 4) erzeugt. Die Ausformung des Nietschaftes im Bereich der freien Stirnfläche sowie der im wesentlichen gerundete Übergang des Nietschaftes in den Nietkopf bewirken darüberhinaus beim Durchstoßen eines im Ausführungsbeispiel gezeigten oberen Bleches während des Nietens eine soweit möglich schonende Behandlung des oberen Bleches und sorgen u. a. dafür, daß dann, wenn der Nietkopf eine plane Oberseite aufweist diese Oberseite mit der umgebenden Blechoberfläche bündig abschließen kann und die kreisförmige Einkerbung beim Übergang Nietkopf-Blechoberfläche ausgesprochen schmal und von nur geringer Tiefe ist.

Ergänzende Weiterbildungen der Erfindung sind in den weiteren Unteransprüchen beschrieben. Neben der dabei angegebenen bevorzugten Formgebung des Nietes ist eine besondere Weiterbildung darin zu sehen (Anspruch 6), daß die Umfangswand der Matrizen-Ausnehmung radial bewegbar ausgeführt ist. Damit ist insbesondere bei dünnen Blechen ein Abstützeffekt beim Schneiden des Oberbleches verbunden, ohne daß der Spreizvorgang des Nietschaftes im unteren Blech in irgendeiner Weise beeinträchtigt wäre, da die federnd abgestützten Nutsteine (Anspruch 7) entsprechend radial nach außen ausweichen können.

Bevorzugte Ausführungsbeispiele des Gegenstandes der Erfindung sind in der Zeichnung gezeigt und nachstehend unter entsprechender Bezugnahme erläutert. Es zeigt

Fig. 1 ein Niet als Teil der selbststanzenden Befestigungsvorrichtung,

Fig. 2 die Anordnung der Einzelelemente (mehrteilige Matrize im Schnitt gemäß Pfeile II in Fig. 3) der selbststanzenden Befestigungsvorrichtung mit den zwischen ihnen aufgenommenen und zu verbindenden Blechen,

Fig. 3 eine Draufsicht auf die mehrteilige Matrize und

Fig. 4 eine nach der Erfindung hergestellte Nietverbindung.

Wie aus den Figuren in ihrer Zusammenschau ersichtlich, sind ein oberes und ein unteres Metallblech 1,2 mittels eines Nietes 3 miteinander verbunden. Dieses besteht aus einem Nietkopf 4 mit planer Oberseite 5 und einem zylinderförmigen Nietschaft 6 mit zentrischer (Längsachse 7) Ausnehmung 8.

Im dem Nietkopf 4 abgewandten Bereich des Nietschaftes 6 ist die Ausnehmung 8 als Konus 9 mit einem Öffnungswinkel « ausgebildet, wobei die Konusflanken 10 vorteilhafterweise leicht gewölbt sein sollten. Damit wird im Rahmen der fertigungstechnisch gegebenen Möglichkeiten quasi eine "scharfe Kante" geschaffen, über die das Niet 3 beim Stanzen das obere Metallblech 1 durchdringen und in das untere Metallblech 2 eindringen kann.

Die übrigen Formgebungs- und Bemaßungsparameter des Nietes 3 gemäß Fig. 1 sind neben dem Konusöffnungswinkel a der Durchmesser d1 der Ausnehmung 8, der Durchmesser d2 des Nietschaftes 6, der Durchmesser D des Nietkopfes 4, die Gesamtlänge L des Nietes 3, die Höhe H des Nietkopfes 4, der auswärts gerichtete Radius R1 für den Übergang Nietschaft 6 zur Unterseite 11 des Nietkopfes 4, der einwärts gerichtete und sich daran anschließende Radius R2 für den Übergang von der Nietkopf-Unterseite 11 zur Nietkopf-Oberseite 5 und der Radius R3 für den Grund 12 der Ausnehmung 8. Die Höhe H des Nietkopfes 4 bestimmt sich aus dem beginnenden Übergang vom Nietschaft 6 zum auswärts gerichteten Radius R1.

Die Ausnehmung 8 weist eine derartige Tiefe auf, daß ihr im Rahmen der fertigungstechnischen Möglichkeiten gerudeter (Radius R3) Grund 12 in den Nietkopf 4 hineinreicht.

Durch den Radius R1 wird beim Stanzvorgang das Entstehen von hohen Spannungsspitzen im Nietkopfbereich vermieden, da keine scharfen Kanten vorliegen.

Der Konusöffnungswinkel a ist vorzugsweise in Abhängigkeit der Materialeigenschaften (Streckgrenze $R_{p0.2}$) der zu verbindenden Metallbleche 1,2 zu wählen. Es haben sich folgende Zuordnungen als günstig erwiesen:

$$R_{p0,2} \geq 250 \text{ N/mm}^2 \triangleq 75° < \alpha < 120°$$

$$R_{p0,2} < 250 \text{ N/mm}^2 \triangleq 25° < \alpha < 75$$

Fig. 2 zeigt in schematisierter Form die weiteren Bestandteile der selbststanzenden Befestigungsvorrichtung. Dabei wird das Niet 3 von einem auf der Oberseite 5 des Nietkopfes 4 aufsetzenden Stößel 13 mit einer Stößelkraft $F_S$ beaufschlagt. Der Stößel 13 ist von einem Niederhalter 14 umgeben, der zusammen mit einer als Gegenhalterwerkzeug dienenden Matrize 15 die Metallbleche 1,2 kontaktiert und mit einer Niederhalterkraft $F_N$ beaufschlagt. Diese Niederhalterkraft $F_N$ sollte während des Niet-Stanzvorganges konstant bleiben, was in geeigneter Weise dadurch gewährleistet werden kann, daß der Niederhalter 14 von einer entsprechenden druckkontrollierten Hydraulikeinheit beaufschlagt wird.

Um die Wirkung des Niederhalters 14 zu optimieren, ist dessen das obere Metallblech 1 kontaktierende Oberfläche aufgerauht. Dadurch kann verhindert werden, daß beim Stanzen die umgebenden Blechbereiche über Gebühr in die Stanzzone eingezogen werden, vielmehr wird das obere Metallblech 1 sauber geschnitten.

Die in den Fig. 2 und 3 gezeigte mehrteilige Matrize 15 weist einen Dorn 20 mit Stempelansatz 16 auf. Der Dorn 20 ist von einer entsprechend dimensionierten Ausnehmung 17 einer Dornaufnahme 18 aufgenommen und von einem seitlich dort eingesetzten Gewindestift 19 gehalten. Über eine zusätzlich in die Ausnehmung 17 eingesetzte Unterlegscheibe 21 bestimmter Stärke, die ohne weiteres gegen eine andere Unterlegscheibe mit davon abweichender Stärke ausgetauscht werden kann, kann erreicht werden, daß der Stempelansatz 16 um ein mehr oder weniger geringes Maß aus der Oberseite 22 der Dornaufnahme 18 herausragt. Eine in die Dornaufnahme 18 eingearbeitete Entlüftungsöffnung 31 reicht bis zur Ausnehmung 17.

In die Oberseite 22 der Dornaufnahme 18 sind drei radial gerichtete, gleichmäßig über den Umfang verteilt angeordnete Nuten 23 eingearbeitet, die jeweils der Aufnahme eines Nutsteines 24 dienen. An ihrem dem Stempelansatz 16 zugewandten Ende weisen die Nutsteine 24 Kreislinienform auf und ergänzen sich zu einer geschlossenen Kreislinie.

Das radial außenliegende Ende eines jeden Nutsteines 24 wird von einer Blattfeder 25 beaufschlagt, welche an der Dornaufnahme 18 mittels Zylinderschrauben 26 befestigt ist. Ein von der Dornaufnahme 18 schließlich nach unten wegragender Zapfen 27 dient seiner Aufnahme und Fixierung in einem Werkzeug.

Im Verlaufe des Nietvorganges werden die Nutsteine 24 durch das vom Niet 3 verdrängte Material insbesondere des unteren Metallbleches 2 nach außen gedrückt, so daß dem Niet 3 schließlich ein den Spreizvorgang günstig beeinflussender zusätzlicher Hohlraum geboten wird. Nach Herstellen der Verbindung und Entfernen des so entstandenen Verbundkörpers aus der Matrize 15 drücken die Blattfedern 25 die Nutsteine 24 wieder in ihre Ausgangsposition zurück.

Wesentlich ist, daß zu Beginn des Fügevorganges der Matrizendurchmesser (von den Nutsteinen 24 gebildete Kreislinie 28) nur geringfügig größer ist, als der Außendurchmesser $d_2$ des Nietschaftes 6, so daß ein möglichst reines Durchstanzen des nietseitigen oberen Metallbleches 1 stattfindet, ohne daß dieses in die Matrize 15 eingezogen wird.

Fig. 4 zeigt schließlich die fertige Nietverbindung. Dabei ist besonders deutlich erkennbar, daß die Oberseite 5 des Nietkopfes 4 bündig mit der Oberseite des oberen Metallbleches 1 abschließt. Auch wird erkennbar, daß die kreisringförmige Kerbe 29 im Übergangsbereich zwischen Nietkopf 4 und oberem Metallblech 1 ausgesprochen schmal und von geringer Tiefe ist. Des weiteren zeigt Fig. 4 den die Festigkeit der Nietverbindung ausgesprochen positiv beeinflussenden großen Hinterschnitt 30, der sich u. a. durch den mit dem Niet 3 beim Stanzen einstellenden großen Nietschaft-Spreizwinkel β (ggf. > 45°) ergibt.

Es versteht sich, daß die selbststanzende Befestigungsvorrichtung auch verwendet werden kann, um mehr als zwei Bleche miteinander zu verbinden oder auch, um lediglich ein Niet, z.B. ein solches mit einem bolzenförmigen Nietkopf, in einem einzelnen Blech zu befestigen.

Des weiteren ist die Anwendung auch nicht auf die Verbindung von Blechtafeln oder Blechprofilen beschränkt. Vielmehr können auch Nichtmetall-Werkstükke (z.B. Kunststoff) auf diese Weise miteinander verbunden werden.

**Patentansprüche**

1. Selbststanzende Befestigungsvorrichtung, bestehend aus einem von einem Stößel (13) beaufschlagten Niet (3) und einem Gegenhalter-Werkzeug (15), wobei das Niet (3) aus einem Nietkopf (4) und einem Nietschaft (6) mit zentrischer Ausnehmung (8) mit geschlossenem Grund (12) besteht und der Nietschaft (6) in der Weise ausgebildet ist, daß dessen freie Stirnfläche ein ihn aufnehmendes Werkstück (2) nicht vollends durchstanzt, wobei im nicht montierten Ausgangszustand des Nietes (3) ein dem Nietkopf (4) abgewandtes Ende des Nietschaftes (6) außenseitig zylindrisch und auf der Seite der Ausnehmung (8) im wesentlichen konusförmig mit einem Öffnungswinkel (α) ausgebildet ist, **dadurch gekennzeichnet, daß** der Nietschaft (6) in der Weise ohne Bildung eines Hinterschnittes in die Unterseite (11) des Nietkopfes (4) übergeht, daß die Nietkopfunterseite im wesentlich durch eine Rundung (R1) gebildet wird und daß der Grund (12) der Ausnehmung (8) ebenfalls gerundet (R3) ist.

2. Befestigungsvorrichtung nach Anspruch 1, **dadurch gekennzeichnet, daß** sich die Höhe (H) des Nietkopfes (4) aus dem beginnenden Übergang vom Nietschaft (6) zur Nietkopf-Unterseite (11) über den Radius (R1) bestimmt und daß die Ausnehmung (8) mit ihrem Grund (12) in den Nietkopf (4) hineinreicht.

3. Befestigungsvorrichtung nach Anspruch 1, **dadurch gekennzeichnet, daß** der Nietschaft (6) bei der fertigen Nietverbindung einen Spreizwinkel β > 45° aufweist.

4. Befestigungsvorrichtung nach einem oder mehreren der Ansprüche 1-3, **dadurch gekennzeichnet, daß** die das Werkstück (Metallblech 1) kontaktierende Oberfläche eines den Stößel (13) umgebenden Niederhalters (14) aufgerauht ist.

5. Befestigungsvorrichtung nach einem oder mehreren der Ansprüche 1 bis 3, **dadurch gekennzeichnet, daß** eine der Aufnahme des während der Herstellung der Nietverbindung sich spreizenden Nietschaftes (6) dienende Ausnehmung (17) des Gegenhaltewerkzeuges (Matrize 15) eine radial bewegbare Umfangswand aufweist.

6. Befestigungsvorrichtung nach Anspruch 5, **dadurch gekennzeichnet, daß** die Matrize (15) mehrteilig ausgebildet ist und auf einer dem Werkstück (Metallblech 2) zugewandten Oberseite (22) einer Dornaufnahme (18) in Nuten (23) geführte, unter Federdruck (Blattfeder 25) gehaltene Nutsteine (24) aufweist.

7. Befestigungsvorrichtung nach Anspruch 5, **dadurch gekennzeichnet, daß** drei gleichmäßig über den Umfang der Dornaufnahme (18) verteilt angeordnete, radial gerichtete Nutsteine (24) vorhanden sind, deren einem mittig in einer Ausnehmung (17) der Dornaufnahme (18) eingesetzten Dorn (20) zugewandte Enden sich zu einer Kreislinie (28) ergänzen.

**Claims**

1. Self-piercing fastening device, consisting of a rivet (3) acted upon by a ram (13), and a dolly tool (15), the rivet (3) consisting of a rivet head (4) and a rivet shank (6) having a central recess (8) with a closed bottom (12) and the rivet shank (6) being designed in such a manner that its free end face does not pierce completely through a workpiece (2) receiving it, wherein, in the non-mounted initial state of the rivet (3), one end of the rivet shank (6) remote from the rivet head (4) is cylindrical on the outside and essentially conical with an apex angle (α) on the side of the recess (8), **characterised in that** the rivet shank (6) merges into the underside (11) of the rivet head (4) in such a manner without the formation of an undercut that the underside of the rivet head is formed essentially by a rounded portion (R1) and that the bottom (12) of the recess (8) is also rounded (R3).

2. Fastening device according to claim 1, **characterised in that** the height (H) of the rivet head (4) is determined from the start of the transition from the rivet shank (6) to the underside (11) of the rivet head via the radius (R1) and that the recess (8) extends into the rivet head (4) by means of its bottom (12).

3. Fastening device according to claim 1, **characterised in that** the rivet shank (6) has an expansion angle β > 45° in the finished riveted joint.

4. Fastening device according to one or more of claims 1-3, **characterised in that** the surface of a hold-down device (14) surrounding the ram (13) and contacting the workpiece (metal sheet 1) is roughened.

5. Fastening device according to one or more of claims 1 to 3, **characterised in that** a recess (17) in the dolly tool (die 15) serving to receive the rivet shank (6) expanding during the production of the riveted joint has a radially movable circumferential wall.

6. Fastening device according to claim 5, **characterised in that** the die (15) is designed as a multi-part die and is provided on one top surface (22) of a mandrel holder (18) directed towards the workpiece (metal sheet 2) with spring-loaded (leaf spring 25) sliding blocks (24) guided in slots (23).

**7.** Fastening device according to claim 5, **characterised by** three radially directed sliding blocks (24) distributed in a uniform manner around the circumference of the mandrel holder (18), the ends of which directed towards a mandrel (20) inserted centrally in a recess (17) in the mandrel holder (18) together form a circle (28).

**Revendications**

**1.** Système de fixation auto-perforant, constitué par un rivet (3) soumis à l'action d'un poussoir (13) et par un outil de contre-appui (15), le rivet (3) se composant d'une tête de rivet (4) et d'une tige de rivet (6) ayant un évidement central (8) à fond fermé (12) et la tige de rivet (6) étant réalisée d'une manière telle, que sa surface frontale libre ne transperce pas entièrement une pièce (2) recevant la tige de rivet, une extrémité de la tige de rivet (6), qui est dirigée à l'opposé de la tête de rivet (4), étant, dans l'état initial du rivet (3), avant sa mise en place, réalisée extérieurement sous une forme cylindrique et, du côté de l'évidement (8), sous une forme essentiellement conique avec un angle d'ouverture ($\alpha$), **caractérisé en ce que** la tige de rivet (6) se joint sans formation d'une contre-dépouille à la face inférieure (11) de la tête de rivet (4) de façon que la face inférieure de la tête de rivet est formée sensiblement par un arrondi (R) et **en ce que** le fond (12) de l'évidement (8) est également arrondi (R3).

**2.** Système de fixation selon la revendication 1, **caractérisé en ce que** la hauteur (H) de la tête de rivet (4), à partir de la naissance de la zone de jonction de la tige de rivet (6) à la face inférieure (11) de la tête de rivet, se détermine par l'intermédiaire du rayon (R1) et **en ce que** l'évidement (8) pénètre dans la tête de rivet (4) par son fond (12).

**3.** Système de fixation selon la revendication 1, **caractérisé en ce que** la tige de rivet (6), lorsque la jonction par rivet a été réalisée, présente un angle d'écartement $\beta > 45°$.

**4.** Système de fixation selon une ou plusieurs des revendications 1 à 3, **caractérisé en ce que** la surface, entrant en contact avec la pièce (tôle métallique 1), d'un serre-flan (14) entourant le poussoir (13) est rugueuse.

**5.** Système de fixation selon une ou plusieurs des revendications 1 à 3, **caractérisé en ce qu'**une cavité (17) de l'outil de contre-appui (matrice 15), qui sert à recevoir la tige de rivet (6) s'élargissant pendant la réalisation de la jonction par rivet, présente une paroi périphérique qui est déplaçable radialement.

**6.** Système de fixation selon la revendication 5, **caractérisé en ce que** la matrice (15) est réalisée en plusieurs éléments et comporte, sur une face (22), tournée vers la pièce (tôle métallique 2), d'un bâti de réception de mandrin (18), des coulisseaux (24) guidés dans des rainures (23) et maintenus sous la poussée d'un ressort (ressort à lame 25).

**7.** Système de fixation selon la revendication 5, **caractérisé en ce qu'**il est prévu trois coulisseaux (24), qui sont uniformément répartis sur le pourtour du bâti de réception de mandrin (18) et sont orientés en direction radiale, et dont les extrémités tournées vers un mandrin (20), inséré en position centrée dans un évidement (17) du bâti de réception de mandrin (18), se complètent pour former une ligne circulaire (28).

FIG.1

FIG.2

FIG.3

FIG.4